## Europäisches Patentamt

## European Patent Office

## Office européen des brevets

(11) Veröffentlichungsnummer: **0 344 626**

**A1**

# EUROPÄISCHE PATENTANMELDUNG

(21) Anmeldenummer: **89109487.2**

(22) Anmeldetag: **26.05.89**

(51) Int. Cl.⁴: **H04N 5/782**

(30) Priorität: **03.06.88 DE 3818801**

(43) Veröffentlichungstag der Anmeldung:
**06.12.89 Patentblatt 89/49**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Welz, Gerhard Grundig EMV Max**
**Grundig holländ.**
**Stiftung & CO KG Kurtgartenstrasse 37**
**D-8510 Fürth/Bay(DE)**

(54) **Anlage zur Wiedergabe von Videoaufzeichnungen von einem Videomagnetbandrecorder.**

(57) Bei einer bekannten Anlage mit einem Computer, einem Videomagnetbandrecorder und einem Bildschirm werden abwechselnd Signale vom Computer und vom Magnetband auf dem Bildschirm dargestellt. In dem Zeitraum, in dem Signale vom Computer dargestellt werden, wird das Magnetband umgespult. Bei der neuen Aufgabe soll eine unterbrechungsfreie Bildsignalwiedergabe auch dann möglich sein, wenn nur eine Videosignalquelle vorhanden ist. Dies wird im wesentlichen durch die Verwendung eines Bildspeichers (7) im Videomagnetbandrecorder (2) erreicht, dessen Ausgangssignal während des Umspulbetriebes auf dem Bildschirm dargestellt wird und welcher weiterhin zur Wiedergabe von gewünschten Szenen vom Magnetband in beliebiger, vorgebbarer Reihenfolge und in unterschiedlichen, vorgebbaren Wiedergabebetriebsarten verwendet wird.

FIGUR 1

EP 0 344 626 A1

## ANLAGE ZUR WIEDERGABE VON VIDEOAUFZEICHNUNGEN VON EINEM VIDEOMAGNETBANDRECORDER

Die Erfindung betrifft eine Anlage zur Wiedergabe von Videoaufzeichnungen mit den im Oberbegriff des Anspruchs 1 angegebenen Merkmalen.

Mittels eine Kamerarecorders getätigte Videoaufzeichnungen, die ohne ein konsequent verfolgtes Drehbuch durchgeführt werden, führen zu einem Magnetband, auf dem eine Vielzahl von Szenenfolgen unterschiedlicher Länge enthalten ist. Diese Szenenfolgen beschreiben oft zusammenhanglose Ereignisse und enthalten ungewollte Szenen. In der Regel gibt der Video-Amateur diese Aufzeichnungen in ihrer originalen Länge wieder ohne sie in einem separaten Vorgang elektronisch zu schneiden und neu zu überspielen, da die elektronische Nachbearbeitung zusätzliche technische Mittel erfordert, die bei Konsumgeräten im allgemeinen aus Kostengründen nicht zur Verfügung stehen.

In der professionellen Technik wird eine elektronische Nachbearbeitung unter Verwendung einer Schnittsteuereinrichtung durchgeführt, welche einen Aufnahme- und einen Wiedergabevideorecorder steuert. Der Aufnahmerecorder muß dabei in der Lage sein, Schnitte nach dem Assemble- oder Insert-Prinzip durchzuführen. Ferner muß in einer Art Vorschau eine Simulation des beabsichtigten Schnittes (Ein- und Ausstieg) auf einem Bildschirm darstellbar sein.

Steht ein Konsumvideorecorder zur Verfügung, welcher für eine elektronische Nachbarbeitung von Aufzeichnungen ausgerüstet ist, so ist für den Benutzer das Festlegen der Szenenübergänge sehr mühsam und die sequentielle Aneinanderreihung der endgültigen Szenenfolge äußerst zeitaufwendig. Weiterhin kommt es beim Überspielen zu Kopierverlusten, die die Bildqualität sichtbar herabsetzen.

Aus der DE-OS 28 35 077 ist eine Gerätekombination aus einer Eingabeeinrichtung, einem Videomagnetbandrecorder, einem Rechenwerk und einem Bildschirm bekannt, welche zur Durchführung eines computergesteuerten Unterrichts verwendet wird. Hierzu sind auf dem Magnetband einer Videokassette ein Computerprogramm, Videopassagen und für den Computer lesbare Positionscodierungen zu den Videopassagen aufgezeichnet. Nach dem Einlegen der Videokassette in den Videorecorder wird das Computerprogramm in den Arbeitsspeicher des Computers übertragen. Unter Steuerung durch den Computer wird der Benutzer schrittweise durch das Lernprogramm geführt, in dessen Rahmen auch Videopassagen vom Band einbezogen werden, die vom Computer unter Verwendung von deren Anfangs- und Endcodierungen individuell angesteuert werden. Die schnelle Ansteuerung der einzelnen Videopassagen erfolgt im Schnell-Vorlauf oder im Schnell-Rücklauf.

Aus der DE-PS 33 40 572 sind ein Verfahren und ein System zum Steuern einer Videoanlage bekannt. Die bekannt Videoanlage enthält einen Computer, einen mit diesem verbundenen Videobandrecorder und einen Bildschirm, auf dem abwechselnd Signale vom Videoband und Signale vom Computer dargestellt werden. In dem Zeitraum, in dem Bilder vom Computer wiedergegeben werden, wird das Videoband umgespult. Die Adreßdaten von Beginn und Ende jedes Bildabschnittes sind im Computer gespeichert und werden zum Auffinden des nächsten gewünschten Bildabschnittes verwendet.

Um sicherzustellen, daß während des Umspulens keine Bildsignalunterbrechungen auf dem Bildschirm auftreten, sind bei diesen bekannten Anlagen zwei verschiedene Videosignalquellen (Magnetband und Computer) notwendig, zwischen denen umgeschaltet werden muß.

Die Aufgabe der Erfindung besteht darin, eine Anlage der im Oberbegriff des Anspruchs 1 angegebenen Art derart weiterzubilden, daß auch dann, wenn nur eine einzige Videosignalquelle zur Verfügung steht, sichergestellt ist, daß während des Umspulens keine Bildsignalunterbrechungen auf dem Bildschirm auftreten.

Diese Aufgabe wird bei einer Anlage der im Oberbegriff des Anspruch 1 angegebenen Art durch die im kennzeichnenden Teil des Anspruchs 1 angegebenen Merkmale gelöst. Vorteilhafte Ausgestaltungen der Erfindung sind in den Unteransprüchen beschrieben.

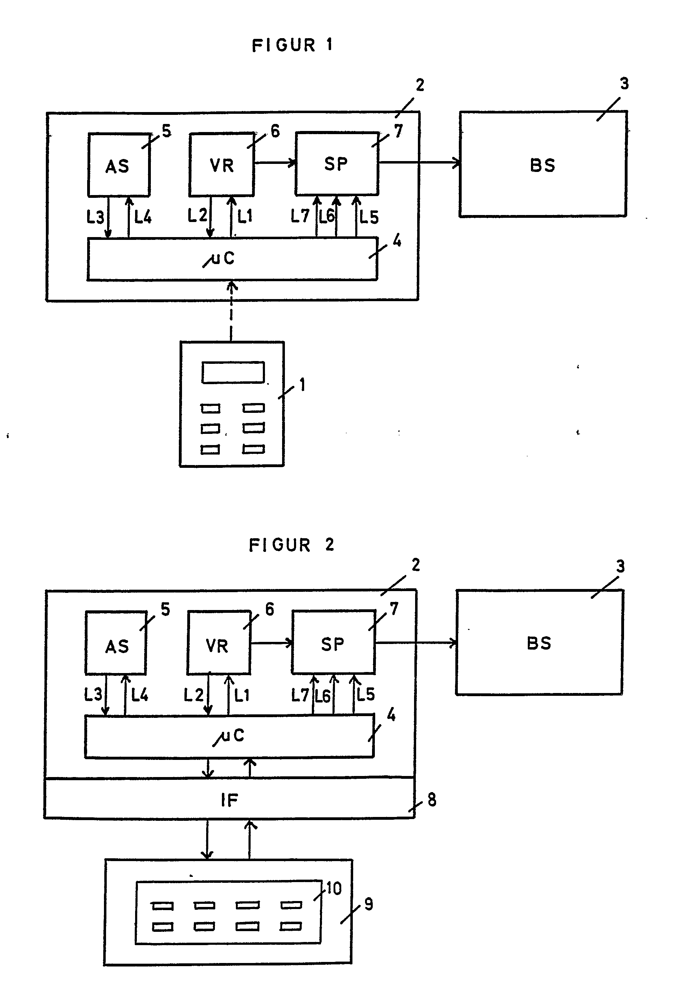

Die Vorteile der Erfindung bestehen insbesondere darin, daß durch die Verwendung des Bildspeichers keinerlei Bildsignalunterbrechungen auf dem Bildschirm auftreten. In vorteilhafter Weise wird der Bildspeicher ferner dazu verwendet, eine störungsfreie Wiedergabe der vom Magnetband wiedergegebenen Signale in einer vom Benutzer über die Einrichtung zur Eingabe von Befehlen für jede Szenenfolge individuell vorgegebenen Wiedergabebetriebsart durchzuführen. Weitere Vorteile der Erfindung ergeben sich aus Ausführungsbeispielen, die im folgenden anhand der Figuren 1 und 2 näher erläutert werden.

Es zeigen:

Figur 1 ein erstes Ausführungsbeispiel, und

Figur 2 ein zweites Ausführungsbeispiel für die Erfindung.

Die in Figur 1 gezeigte Anlage weist eine Infrarot-Fernbedienung 1, einen Videorecorder 2 und einen Bildschirm 3 auf. Der Videorecorder 2 besitzt einen Mikrocomputer 4, einen Arbeitsspeicher 5, eine Magnetbandeinheit 6, welche alle herkömmlichen Baugruppen eines Videorecorders umfaßt (Magnetband, Videosignalaufzeichnungs- und -wiedergabeköpfe, Bandpositionssignal-Schreib-/Lesekopf, Bandantriebsmotor, ...) und einen Bildspeicher 7.

Im folgenden wird die Funktionsweise der in der Figur 1 gezeigten Anlage beispielhaft näher erläutert.

Eine unter Verwendung eines (nicht gezeichneten) Kamerarecorders mit einer Vielzahl von Szenen bespielte Magnetbandkassette wird in den Videorecorder 2 eingelegt.

Mittels der alphanumerischen Tastatur der Fernbedienung 1 wird der Kassette ein Titel zugeordnet und in geeigneter Form über die Leitung L4 im Arbeitsspeicher 5 des Videorecorders 2 unter einer Rangnummer abgelegt, welche für den (weiter unten beschriebenen) Wiedergabevorgang von Bedeutung ist. Anschließend wird eine Szenenauswahl wie folgt durchgeführt:

Nach Betätigung der Wiedergabetaste auf der Fernbedienung 1 wird die Magnetbandeinheit 6 vom Mikrocomputer 4 über die Leitung L1 in eine normale Wiedergabebetriebsart gebracht. Das von den Videosignalwiedergabeköpfen wiedergegebene Videosignal wird im Bildspeicher 7 zeitfehlerkorrigiert und auf dem Bildschirm 3, beispielsweise dem eines Fernsehempfängers, dargestellt.

Während dieses Wiedergabevorgangs läuft ständig ein Bandzähler mit, so daß stets eine Information über die momentane Bandposition vorliegt. Dieser Bandzähler ist beispielsweise mit dem Bandpositionssignal-Schreib-Lesekopf (CTL-Kopf) verbunden, welcher die in einer Steuerspur des Magnetbandes (CTL-Spur) aufgezeichneten Bandpositionssignale (CTL-Impulse) liest. Alternativ hierzu ist es auch denkbar, daß die Information über die momentane Bandposition durch Erfassung einer auf dem Magnetband aufgezeichneten Zeitinformation gewonnen wird.

Durch Betätigung einer Markiertaste auf der Fernbedienung 1 werden die Anfänge und Enden gewünschter Szenen festgelegt. Bei jeder Betätigung der Markiertaste wird ein der momentanen Bandposition entsprechendes Signal über die Leitung L4 im Arbeitsspeicher 5 des Videorecorders 2 abgelegt. Ferner wird mittels der Fernbedienung 1 festgelegt, in welcher Reihenfolge die einzelnen Szenen wiedergegeben werden sollen. Dies erfolgt dadurch, daß den einzelnen Szenen Rangnummern zugeordnet werden und der (weiter unten beschriebene) Wiedergabevorgang nach aufsteigenden Rangnummern durchgeführt wird. Die mittels der Fernbedienung 1 festgelegte Rangnummer der jeweiligen Szene wird ebenfalls über die Leitung L4 im Arbeitsspeicher 5 abgelegt. Ferner wird mittels der Fernbedienung 1 festgelegt, in welcher Betriebsart die ausgewählte Szene bei dem (weiter unten beschriebenen) Wiedergabevorgang wiedergegeben werden soll. Mögliche Betriebsarten sind normale Wiedergabe, Wiedergabe als Einzelbildfolge, Standbildwiedergabe, Bildsuchlauf, Zeitlupe, sowie Spezialeffekte, wie beispielsweise Ein- und Ausblenden, Trick-Effekte, Zoom und Bild-im-Bild-Wiedergabe. Auch dieses Betriebsart-Kennsignal wid über die Leitung L4 im Arbeitsspeicher 5 abgelegt.

Nach der Beendigung der Szenenauswahl ist damit im Arbeitsspeicher 5 ein Datensatz abgelegt, welcher einer Befehlsfolge für einen Wiedergabevorgang entspricht.

Eine vorteilhafte Weiterbildung der Erfindung sieht vor, mehrere Szenenauswahlvorgänge durchzuführen und damit verschiedene Datensätze im Arbeitsspeicher 5 zu speichern.

Jeder dieser Datensätze kann bei dem sich anschließenden Wiedergabevorgang abgerufen und damit zum Abspielen der Kassette verwendet werden.

Im folgenden wird ein Beispiel für einen Wiedergabevorgang näher erläutert:

Mittels der Fernbedienung 1 wird einer der genannten Datensätze ausgewählt. Gemäß dem ersten Befehl der durch den ausgewählten Datensatz bestimmten Befehlsfolge ( = Befehl mit der niedrigsten Rangnummer) wird der der Kassette zugeordnete Titel über die Leitung L3 aus dem Arbeitsspeicher 5 ausgelesen und über den Mikrocomputer 4 und die Leitung L5 unter Verwendung des Bildspeichers 7 auf dem Bildschirm 3 als Standbild dargestellt.

Während des Zeitintervalls, in dem der Titel auf dem Bildschirm 3 dargestelt wird, wird das Magnetband unter Steuerung durch den Mikrocomputer 4 zum Anfang der nächsten wiederzugebenden Szene gespult.

Dieser Umspulvorgang erfolgt im Suchlaufbetrieb, d.h. bei eingefädeltem Band, wenn die Differenz zwischen der Bandposition der nächsten anzufahrenden Szene und der momentanen Bandposition kleiner ist als ein Schwellwert, und im schnellen Umspulbetrieb, wenn die Differenz zwischen den Bandposition der nächsten anzufahrenden Szene und der momentanen Bandposition größer ist als der Schwellwert. Die Differenz zwischen den genannten Bandpositionen wird im Mikrocomputer 4 ermittelt, welchem die Information über die momentane Bandposition über die Leitung L2 und die Information über die nächste anzufahrende Bandposition über die Leitung L3 vom Arbeitsspeicher 5 zugeführt wird. In Abhängigkeit von der ermittelten Differenz steuert der Mikrocomputer über die Leitung L1 den Bandantriebsmotor im oben beschriebenen Sinne, wobei die Bandantriebsgeschwindigkeit in vorteilhafter Weise so gesteuert werden kann, daß sie mit kleiner werdendem Abstand zwischen Bandsoll- und Bandistposition ebenfalls kleiner wird.

Da auch im schnellen Umspulbetrieb die momentane Bandposition erfaßt werden muß, muß der Bandpositionssignal-Schreib-/Lesekopf so angeordnet sein, daß er auch im ausgefädeltem Zustand des Magnetbandes am Magnetband anliegt und das gewünschte Bandpositionssignal zur Verfügung stellt. Dies kann dann erreicht werden, wenn sich das Magnetband im schnellen Umspulbetrieb nicht vollständig in der Kassette befindet, sondern zumindest am Bandpositionssignal-Schreib-/Lesekopf vorbeigeführt wird.

Ist die gewünschte Bandposition erreicht, so wird die dort aufgezeichnete Szene beispielsweise im Zeitlupenbetrieb unter Verwendung des Bildspeichers 7 auf dem Bildschirm 3 dargestellt. Ist das Ende der Szene erreicht, so wird das letzte Bild der Szene, welches im Bildspeicher 7 abgespeichert ist, solange wiedergegeben, bis das Umspulen zur nächsten wiederzugebenden Szene beendet ist. Diese wird beispielsweise im Suchlaufbetrieb wiedergegeben, usw.. Die zum vorstehend beschriebenen Wiedergabebetrieb nötigen Einschreib- und Auslesetaktsignale werden im Mikrocomputer 4 erzeugt und dem Bildspeicher 7 über die Leitungen L6 und L7 zugeführt. Der Mikrocomputer 4 wiederum erhält die zur Erzeugung von Einschreib- und Auslesetakt notwendigen Signale über die Leitung L3 aus dem Arbeitsspeicher.

Durch die Erfindung wurde damit die Möglichkeit geschaffen, aus einer Vielzahl von Szenen einer bespielten Magnetbandkassette gewünschte Szenen in gewünschter, vorgebbarer Reihenfolge unterbrechungsfrei wiederzugeben. Ferner besteht die Möglichkeit, ungewünschte Szenen wegzulassen. Weiterhin kann jede der gewünschten Szenen in jeder der oben genannten Betriebsarten wiedergegeben werden.

Die vorgenannten Eigenschaften der Erfindung führen zu einer Vielzahl von Anwendungsmöglichkeiten für die beanspruchte Anlage. Beispielhaft werden folgende genannt:
- Die beschriebene Anlage kann zur Nachbearbeitung von selbst durchgeführten Aufzeichnungen verwendet werden. Die Vorteile dieser Anwendung sind insbesondere darin zu sehen, daß es ohne zusätzlichen technischen Aufwand (Schnittsteuereinrichtung, Aufnahmerecorder. Wiedergaberecorder, etc.) möglich ist, ungewünschte Teile der Eigenaufnahmen zu überspringen und die Reihenfolge einzelner Szenen zu verändern. Ferner treten keine durch einen eventuellen Überspielvorgang verursachten Bildqualitätsverluste auf.
- Die beschriebene Anlage kann zur Lehrzwecke verwendet werden. Die Vorteile dieser Anwendung liegen insbesondere darin, daß wichtige Szenen mehrmals und gegebenenfalls als Standbild bzw. in Zeitlupe auf dem Bildschirm dargestellt werden können.

- Die beschriebene Anlage kann zu Werbezwecken verwendet werden. die Vorteile dieser Anwendung liegen insbesondere darin, daß besonders werbewirksame Teile der Aufzeichnung durch Wiederholung und/oder Trickeffekte herausgestellt werden können.

Im folgenden wird anhand der Figur 2 ein weiteres Ausführungsbeispiel für die Erfindung beschrieben.

Bei der in Figur 2 gezeigten Anlage wird zur Eingabe der Befehle die Tastatur 10 eines an den Videorecorder 2 angeschlossenen Heimcomputers 9 verwendet.

Die eingebenden Befehle werden in einem zwischen der Tastatur 10 des Heimcomputers und dem Mikrocomputer 4 angeordneten Interface 8 aufbereitet. Die Aufgabe dieser Interface-Schaltung 8 besteht darin, eine Umwandlung des im Videorecorder üblichen Datenformats (z. B. $I^2C$-Bus bzw. Fernsteuercode) in das Datenformat des Heimcomputers (z. B. Centronix-Schnittstelle bzw. neutrale Parallelschnittstelle) umzusetzen. Das Interface 8 kann entweder Bestandteil des Videorecorders 2 oder des Heimcomputers 9 sein oder auch als eigenes Bauteil zwischen dem Videorecorder 2 und dem Heimcomputer 9 angeordnet sein.

Die weiteren Bauteile der in Figur 2 gezeigten Anlage entsprechen denen von Figur 1. Zur Erläuterung der Funktionsweise dieser weiteren Bauteile wird auf die entsprechenden Ausführungen zu Figur 1 verwiesen.

Die Vorteile der in Figur 2 gezeigten Anlage bestehen insbesondere darin, daß die Tastatur 10 des Heimcomputers 9 in Bezug auf die Gestaltung von Titel-und Grafikelementen wesentlich mehr Möglichkeiten bietet als die Fernbedienung 1 (siehe Figur 1) eines Videorecorders.

Eine vorteilhafte Weiterbildung der in Figur 2 gezeigten Anlage besteht darin, daß der Heimcomputer 9 auch Kontroll- und Steuerfunktionen für den Videorecorder 2 übernimmt. So kann der im Zusammenhang mit Figur 1 beschriebene Arbeitsspeicher 5 auch Bestandteil des Heimcomputers sein, so daß die oben genannten Datensätze bzw. Befehlsfolgen für den Wiedergabevorgang nicht im Videorecorder 2 abgespeichert sein müssen. Zur Abspeicherung der genannten Datensätze bzw. Befehlsfolgen kann beispielsweise eine (nicht gezeichnete) Floppy-Disk des Heimcomputers verwendet werde. Soll - wie vorstehend beschrieben - der Heimcomputer 9 Kontroll- und Steuerfunktionen für den Videorecorder 2 übernehmen, so müssen ihm vom Videorecorder 2 die vom wiedergegebenen Videosignal abgetrennten Synchronsignale und/oder die Bandpositionssignale zugeführt werden.

Damit die genannten Datensätze bzw. Befehlsfolgen zu einem späteren Zeitpunkt problemlos zur Verfügung stehen, können diese nach Abschluß des Szenenauswahlvorganges an einer geeigneten Stelle auf dem Magnetband aufgezeichnet werden, z. B. auf dem Vor-oder Nachspann einer Videokassette. Bei einer späteren Vorführung der Kassette müßte dann lediglich der Vor-oder Nachspann der Kassette wiedergegeben werden, um die dort abgespeicherten Datensätze bzw. Befehlsfolgen wieder in den Arbeitsspeicher zu laden.

## Ansprüche

1. Anlage zur Wiedergabe von Videoaufzeichnungen, mit
- einer Einrichtung zur Eingabe von Befehlen,
- einem Videomagnetbandrecorder, auf dessen Magnetband eine Vielzahl von Szenen aufgezeichnet ist, welche unter Steuerung durch einen Computer in beliebiger, mittels der Einrichtung zur Eingabe von Befehlen vorgebbarer Reihenfolge vom Magnetband wiedergegeben werden, und
- einem Bildschirm zur Darstellung der wiedergegebenen Signale, wobei die Bandpositionen der Anfänge und Enden der einzelnen Szenen erfaßt und zum Umspulbetrieb zwischen der Wiedergabe zweier Szenen verwendet werden,
dadurch gekennzeichnet, daß - der Videomagnetbandrecorder (2) einen Bildspeicher (7) enthält,
- die vom Magnetband wiedergegebenen Szenen nacheinander unter Verwendung des Bildspeichers (7) in unterschiedlichen, vorgebbaren Wiedergabebetriebsarten auf dem Bildschirm (3) dargestellt werden, und
- während des Umspulbetriebs ein im Bildspeicher (7) abgespeichertes Signal auf dem Bildschirm (3) dargestellt wird.

2. Anlage nach Anspruch 1, dadurch gekennzeichnet, daß die Einrichtung zur Eingabe von Befehlen eine Fernbedienung (1) und der Computer ein im Gehäuse des Videomagnetbandrecorders (2) angeordneter Mikrocomputer (4) ist.

3. Anlage nach Anspruch 1, dadurch gekennzeichnet, daß die Einrichtung zur Eingabe von Befehlen die Tastatur (10) eines Heimcomputers (9) ist, welcher mit dem Videomagnetbandrecorder (2) verbunden ist und die Wiedergabe der Szenen vom Magnetband steuert.

4. Anlage nach Anspruch 1, dadurch gekennzeichnet, daß die Einrichtung zur Eingabe von Befehlen die Tastatur (10) eines Heimcomputers (9) ist, welcher mit dem Videomagnetbandrecorder (2) verbunden ist, und daß die Wiedergabe der Szenen von einem im Gehäuse des Videomagnetbandrecorders (2) angeordneten Mikrocomputer (4) gesteuert wird.

5. Anlage nach einem oder mehreren der Ansprüche 1 - 4, dadurch gekennzeichnet, daß die Bandpositionen der Anfänge und Enden der wiederzugebenden Szenen durch einen Bandzähler erfaßt werden.

6. Anlage nach einem oder mehreren der Ansprüche 1 - 4, dadurch gekennzeichnet, daß die Bandpositionen der Anfänge und Enden der wiederzugebenden Szenen in Realzeit erfaßt werden.

7. Anlage nach einem oder mehreren der Ansprüche 4 - 6, dadurch gekennzeichnet, daß eine Recheneinheit (4, 9) vorgesehen ist, welche durch Vergleich der momentanen Bandposition mit der nächsten anzufahrenden Bandposition ein Umspulen im Suchlaufbetrieb oder ein Umspulen bei ausgefädeltem Magnetband initiiert.

8. Anlage nach Anspruch 7, dadurch gekennzeichnet, daß das Umspulen im ausgefädelten Zustand des Magnetbandes erfolgt und ein Magnetkopf vorgesehen ist, welcher die die Bandpositionen der Anfänge und Enden der Szenen beschreibenden, auf dem Magnetband aufgezeichneten Signale liest.

9. Anlage nach einem oder mehreren der Ansprüche 1 - 8, dadurch gekennzeichnet, daß Signale, die den mittels der Einrichtung zur Eingabe von Befehlen eingegebenen Befehlen entsprechen, auf dem Magnetband abgespeichert werden.

FIGUR 1

FIGUR 2

## EINSCHLÄGIGE DOKUMENTE

EP 89109487.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO - A1 - 86/01 063 (INTRAVIEW) * Fig. 1; Seite 1, Zeile 9 - Seite 2, Zeile 20; Seite 4, Zeilen 2-8,23-26; Seite 5, Zeilen 17-29; Seite 16, Zeilen 14-30; Ansprüche 1, 28 * -- | 1,5-7 | H 04 N 5/782 |
| Y | DE - A1 - 3 325 810 (BERCHTOLD) * Fig. 1; Seite 7, Zeile 36 - Seite 8, Zeile 19 * -- | 1,5-8 | |
| Y | GB - A - 2 033 692 (TSUYOSHI) * Zusammenfassung; Seite 1, Zeilen 69-76; Fig. 5,6; Seite 3, Zeile 34 - Seite 4, Zeile 57; Ansprüche 1,7,8 * -- | 1,5-8 | |
| A | US - A - 4 578 718 (PARKER) * Zusammenfassung; Fig. 1; Spalte 2, Zeilen 27-49; Spalte 8, Zeilen 19-31 * ---- | 1-9 | RECHERCHIERTE SACHGEBIETE (Int. Cl.4) H 04 N 5/00 H 04 N 9/00 |

Der vorliegende Recherchenbericht wurde für alle Patentansprüche erstellt.

| Recherchenort | Abschlußdatum der Recherche | Prüfer |
|---|---|---|
| WIEN | 24-08-1989 | DIMITROW |

EPA Form 1503 03 82